# EUROPEAN PATENT APPLICATION

(11) **EP 1 220 536 A1**
(43) Date of publication of application: **03.07.2002**
(21) Application number: 01310665.3
(22) Date of filing: 20.12.2001
(51) Int. Cl.: H04N 5/445

(54) **Digital television apparatus**

(30) Priority: 20.12.2000 US 257307
(71) Applicant: SAMSUNG ELECTRONICS CO., LTD., Suwon-City, Kyungki-do (KR)
(72) Inventor: Kim, Yeong-taeg, Irvine, California 92618 (US)
(74) Representative: Geary, Stuart Lloyd

(57) **Abstract**

In a digital television receiver stored video advertisement messages are combined with digital television video content that is being received from a digital television service provider and the combination is output for viewing by a consumer or subscriber. The subscriber can agree to view the stored video advertisement messages in exchange for receiving the digital television receiver at a reduced cost and additionally or alternatively, may receive digital video programming from a digital television service provider at a reduced cost.

## Description

The present invention relates to a digital television receiving apparatus including supplementary image storage means for storing supplementary image data and means for combining image data from said storage means with received television programme image data to produce a composite image for display, and to a method of operation of a digital television receiving apparatus.

At the present time, digital television receivers are much more expensive to manufacture than analog television receivers, and this cost is passed on to consumers. A consumer may also incur a cost for receiving digital television programming from a broadcast network. There is a need to offset these costs so that a consumer can more economically obtain a digital television receiver and can possibly more economically receive digital television programming.

A digital television apparatus according to the present invention is characterised by control means for disabling the apparatus in dependence on the usage of supplementary image data from said storage means to produce composite images. The apparatus may be in the form of an integrated television set or comprise a television set and a separate digital TV decoder.

A television apparatus according to the present invention can be used to combine advertisement messages with digital television content that is being received from a digital television service provider and output the combination to be viewed and/or heard by a consumer or subscriber.

Preferably, said control means is configured to disable the apparatus when a predetermined number of supplementary images have been used to form composite images.

Preferably, an apparatus according to the present invention includes data network connection means and the control means is configured to be operable to received supplementary image data by means of the data network connection means and store received supplementary image data in said storage means.

When an embodiment of the present invention is employed, a subscriber can agree to receive the stored advertisement messages in exchange for receiving the digital television receiver at a reduced cost and additionally or alternatively, may receive digital video programming from a digital television service provider at a reduced cost. It should be understood that the reduced cost can, in fact, be no cost at all. A service operator facilitating the agreement can obtain revenue by charging entities for storing advertisement messages in the digital television receivers. The revenue generated in this manner can be used to offset the costs that would otherwise be passed on to the subscriber. These stored advertisement messages will subsequently be output with the regular digital television content as that content is received from the digital television service provider.

According to the present invention, there is provided a method for operating a digital television receiver, that includes steps of: providing a digital television receiver performing a Digital TV function; storing a plurality of advertisement messages in a storage device; subsequent to storing the plurality of the advertisement messages, using the digital television receiver to receive video data from a digital television service provider; and with the digital television receiver, outputting the plurality of the advertisement messages and the received video data. If a predetermined number of the plurality of the advertisement messages has been output, then the method includes disabling the digital TV function of the digital television receiver.

In accordance with an added mode of the invention, after the digital TV function has been disabled, a new set of the plurality of advertisement messages is stored in the storage device; and subsequently the digital TV function of the digital television receiver is enabled.

In accordance with an additional mode of the invention, the step of storing the new set of the plurality of the advertisement messages in the storage device is performed by downloading the new set of the plurality of the advertisement messages from a network.

In accordance with another mode of the invention, the predetermined number is set such that all of the plurality of the advertisement messages that were stored will be output.

In accordance with a further mode of the invention, the outputting step is performed such that the plurality of the advertisement messages that were stored are output as banner advertisement messages together with the received video data.

In accordance with a further added mode of the invention, the storage device is provided as a component of the digital television receiver.

In accordance with a further additional mode of the invention, the step of storing the plurality of the advertisement messages is performed by downloading the plurality of the advertisement messages from a network.

In accordance with yet an added mode of the invention, the method includes: receiving additional video data from the digital television service provider; with the digital television receiver, outputting the additional video data without outputting the plurality of the advertisement messages; and limiting the duration that the step of outputting the additional video without outputting the plurality of the advertisement messages can be performed.

In accordance with yet an additional mode of the invention, the limiting step is performed by: initializing a counter to a predetermined value; incrementing the counter by an amount corresponding to the amount of time that the step of outputting the plurality of the advertisement messages and the received video data is being performed; decrementing the counter by an amount corresponding to the amount of time that the step of outputting the additional video without outputting the plurality of the advertisement messages is being performed; and when the counter reaches the predetermined value, discontinuing the step of outputting the additional video without outputting the plurality of the advertisement messages.

In accordance with yet another mode of the invention, zero is provided as the predetermined value.

In accordance with yet a further mode of the invention, the counter is provided as a component of the digital television receiver.

With the foregoing and other objects in view there is provided, in accordance with the invention, a digital television receiver, that includes: a video decoder for decoding received video bit streams of a selected program to obtain decoded video bit streams of the selected program; a banner storage device for storing data representing advertisement messages and thereby obtaining stored data; a banner rendering unit for decoding and rendering the stored data to obtain rendered data; a video reconstruction unit for combining the rendered data with the decoded video bit streams of the selected program to obtain a combined video output signal that includes information representing the selected program; a banner manager unit for reading out the stored data from the banner storage device and for providing the stored data to the banner rendering unit, the banner manager unit generating a disable signal when a predetermined number of the advertisement messages, represented by the stored data, have been read out from the banner storage device; and an output terminal connected to the video reconstruction unit for receiving the combined video output signal and for outputting the combined video output signal.

In accordance with an added feature of the invention, the television receiver includes a system control unit for receiving the disable signal and, in response thereto, for prohibiting the output terminal from receiving the information representing the selected program.

In accordance with an additional feature of the invention, the television receiver includes a counter having a value that is incremented as the rendered data is combined with the decoded video bit streams of the selected program in the video reconstruction unit. The video reconstruction unit is also configured to selectively output the information representing the selected program without the rendered data. The value of the counter is decremented in proportion to an amount of time during which the video reconstruction unit is outputting the information representing the selected program without the rendered data. When the value of the counter reaches a predetermined lower limit value, the video reconstruction unit is prohibited from outputting the information representing the selected program without the rendered data.

In accordance with a concomitant feature of the invention, television receiver includes a network adapter for downloading the stored data into the banner storage device from an external network.

Other preferred and optional features are set forth in the appended claims.

Embodiments of the present invention will now be described, by way of example, with reference to the accompanying drawings, in which:-
Figure 1 is a block diagram of a conventional digital television receiver;
Figure 2 is a descriptive diagram of a banner activated digital television receiver;
Figure 3 is a diagram of a display device outputting a banner and regular digital television video content;
Figure 4 is a detailed block diagram of a first embodiment of the banner activated digital television receiver; and
Figure 5 is a detailed block diagram of a second embodiment of the banner activated digital television receiver.

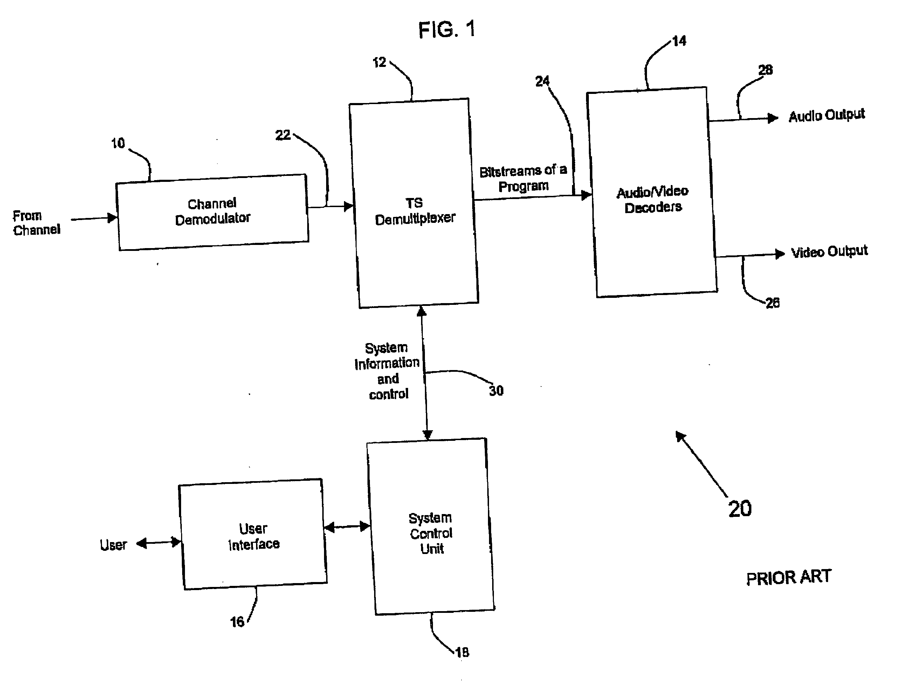

Referring now to the figures of the drawing in detail and first, particularly, to Figure 1 thereof, there is shown a block diagram of a conventional digital television receiver 20. The digital television receiver 20 includes a channel demodulator 10 for receiving the incoming signal of a channel that a user has selected or tuned. The channel demodulator 10 outputs a multi-program transport stream 22 that consists of a series of TS (Transport Stream) packets in which each TS packet includes a coded bit-stream. The TS packets include the video contents of programs that have been encoded using MPEG-2 (Moving Pictures Experts Group-2) video coding and using AC-3 audio coding, for example.

A TS demultiplexer 12 receives the multi-program transport stream 22 and demultiplexes various packets in the transport stream 22 in accordance with commands 30 received from a system control unit 18. The system control unit 18 initially instructs the TS demultiplexer 12 to extract system information (SI) such as the packet identification codes (PID's) of the packets of the bit-streams of the programs in the selected channel. Once the user has selected a specific program in the channel, the system control unit 18 sends the packets of the bit-streams, having PID's that are associated with the selected program, to the TS demultiplexer 12. The TS demultiplexer 12 then extracts the audio and video bit-streams 24 of the selected program and sends them to the associated audio and video decoders 14. The audio and video decoders 14 then respectively decode the audio and video bit-streams 24 of the selected program and output a decoded video signal 26 and a decoded audio signal 28.

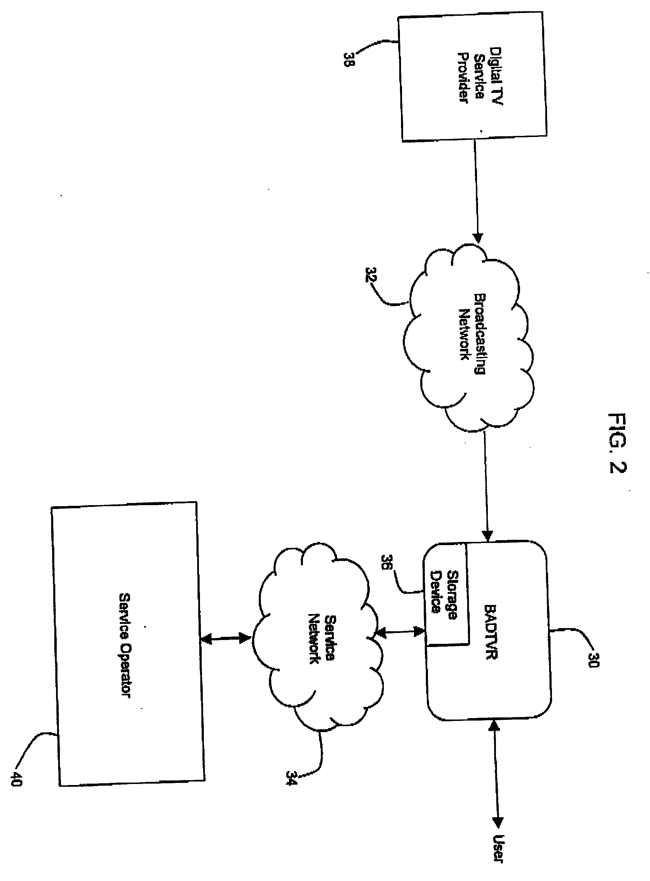

Referring now to Figure 2, there is shown a descriptive diagram used to illustrate the operation of an inventive digital television receiver, specifically a banner activated digital television receiver (BADTVR) 30 that can receive digital video television content via a broadcasting network 32. The digital video television content can be obtained from a digital television service provider 38, for example, a terrestrial digital television broadcasting service provider, a digital cable television service provider, a digital satellite television service provider, a video-on-demand service provider, etc. The BADTVR 30 has a banner storage device 36 into which advertisement messages in the form of banner bit streams are stored. As long as there are banner bit streams stored in the banner storage device 36, the BADTVR 30 is enabled to output the regular digital audio and digital video content obtained from a broadcasting network 32. The BADTVR 30 consecutively outputs the banner bit streams concurrently with the regular digital audio and digital video content. However, if there are no longer any banner bit streams stored in the banner storage device 36, then the DTV function of the BADTVR 30 is disabled and the regular digital video and/or audio content can no longer be output.

A service operator (SO) can obtain additional revenue by charging businesses or other organizations for placing these advertisement messages. A promotional agreement between the service operator and a subscriber can provide financial incentives to motivate the subscriber to receive these advertisement messages. For example, in exchange for viewing these advertisement messages, the subscriber could receive digital television content at no charge or at a charge that is reduced from the prevailing charge at that time. Alternatively or in addition, the subscriber could be provided with the BADTVR 30 at no charge or at a charge that is reduced from the charge prevailing at that time. It should be noted that the service provider 40 can be the same entity as the digital television service provider 38, but this need not be the case.

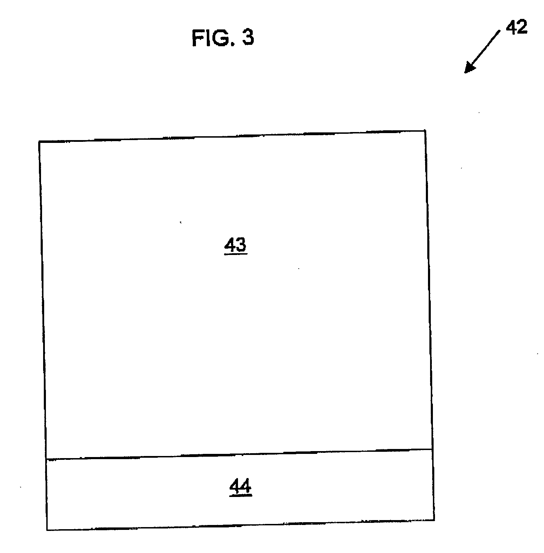

A plurality of bit-streams representing a plurality of advertisement messages or banners can be downloaded from a service operator 40, via a service network 34, into a banner storage device 36 located in the BADTVR 30. Subsequently, while regular digital video and audio content is being received by the BADTVR 30, the banner bit-streams are obtained from the banner storage device 36 and the banners 44 are displayed along with the regular digital video content 43 on a display device 42, such as a CRT (cathode ray tube) as shown in Figure 3. When all of the banner bit streams have been read from the storage device 36 and have been displayed by the display device 42, a control unit generates a disable signal. In response to the disable signal, the digital TV functions of the BADTVR are disabled.

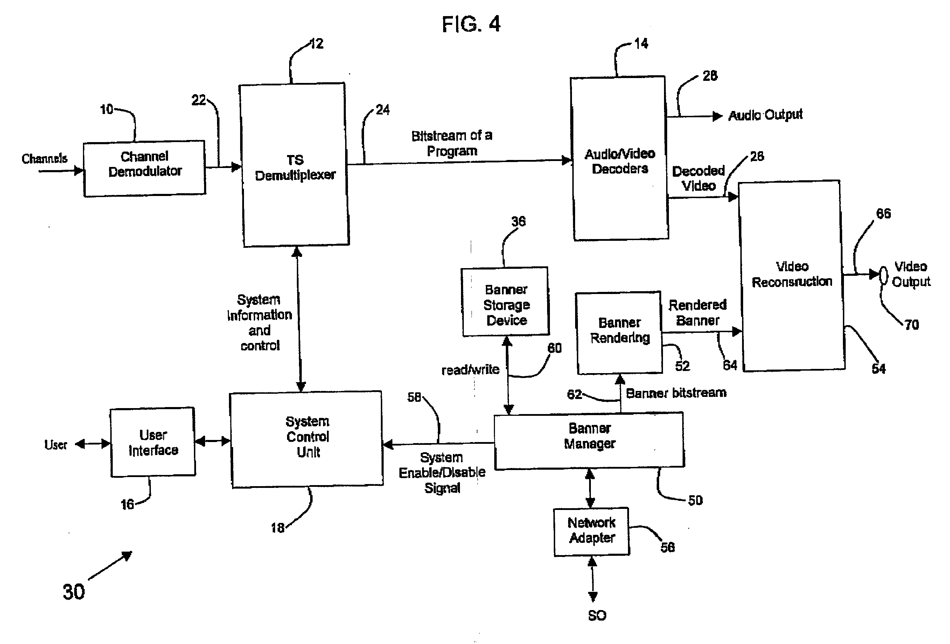

Referring now to Figure 4, there is shown a detailed block diagram of a first embodiment of the BADTVR 30. All of the components that were described with reference to Figure 1 have been shown with the same reference numerals, and since their operation is substantially the same they will not be repetitively described. In addition, the banner storage device 36 that was described with reference to Figure 2 has been shown with the same reference numeral.

The banner manager 50 obtains the banner bit streams 60 from the banner storage device 36 and sends the banner bit streams (now indicated with reference numeral 62) to the banner rendering unit 52. The banner rendering unit 52 decodes and renders the banner bit streams 62. The video reconstruction unit 54 then combines the rendered banner bit streams 64 with the decoded video signal 26 and outputs the result 66 at an output terminal 70 for display by a display device.

When all of the banner bit streams 60 have been combined with the decoded video signal 26, and output for display, then the banner manager 50 promtly sends a disable signal to the sytem control unit 18. The disable signal can be part of a combined enable/disable signal 58 having two logic states. Upon receipt of the disable signal, the sytem control unit 18 will then, in any number of ways, which will now be apparent to one of ordinary skill in the art, disable the Digital TV function of the BADTVR 30. The system control unit 18 will also inform the subscriber that a new set of banner bit streams needs to be stored in the banner storage device 36. The banner manager 50 can connect to the Service Operators service network 34 to download a new set of banner bit streams either automatically, in response to a signal generated by the system control unit 18, or upon an action from the subscriber. After the new set of banner bit streams have been downloaded, the banner manager 50 will output the system enable signal to the system control unit 18 to again enable the Digital TV function of the BADTVR 30.

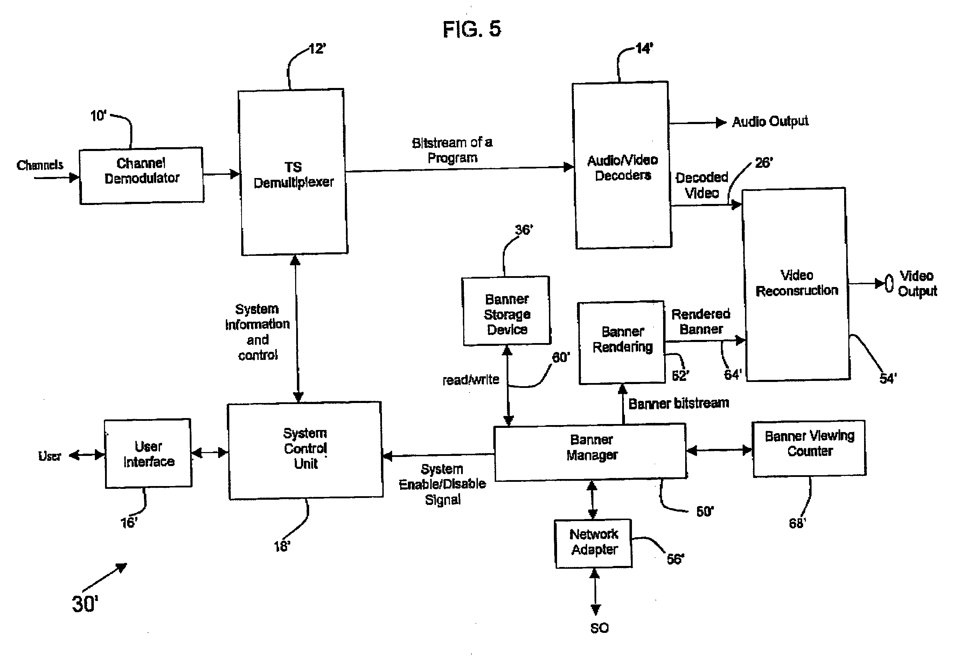

Referring now to Figure 5, there is shown a detailed block diagram of a second embodiment of the BADTVR 30'. All of the components that were described with reference to Figure 4 have been shown with the same reference numerals except that now they are accompanied with a prime character('), and since their operation is substantially the same they will not be repetitively described. The second embodiment of the BADTVR 30' has been additionally provided with a banner viewing counter 68'. The BADTVR 30' provides the subscriber with the option of viewing regular digital video content 43 or television programming without the addition of the banners 44 to the viewing screen. While the banners 44 are being displayed along with the regular digital video content 43, the value of the banner viewing counter 68' will increase from zero in proportion to the amount of time during which the banners 44 have been displayed. If the subscriber decides to view regular digital video content 43 without the banners 44, the subscriber can activate an appropriate input signal and the banner manager 50' will check the value of the banner viewing counter 68' to see if the value is above zero. If the value is above zero, the banner manager 50' will continue to send the enable signal to the system control unit 18' so that the subscriber can continue to view regular digital video content 43, however, the video reconstruction unit 54' will now only output the decoded video signal 26' so that banners 44 are not displayed. During this time, however, the value of the banner viewing counter 68' will decrease in proportion to the amount of time during which the decoded video signal 26 without the banners 44 has been displayed. When the value in the banner viewing counter 68' reaches zero, the banner manager 50' will check to see if there are banner bit streams stored in the banner storage device 36' that have not been displayed. If so, the banner manager 50' will continue to send the enable signal to the system control unit 18' so that the subscriber can continue to view regular digital video content 43, however, the video reconstruction unit 54' will now again combine the decoded video signal 26' with the rendered banner bit streams 64' so that banners 44 are again displayed. If there are not un-displayed banner bit streams 60 stored in the banner storage device 36', then the banner manager 50' will promptly send a disable signal to the system control unit 18' to disable the Digital TV Function of the BADTVR 30'. The system control unit 18' will also inform the subscriber that a new set of banner bit streams needs to be stored in the banner storage device 36'. The banner manager 50' can connect to the Service Operators service network 34 (See Figure 2) to download a new set of banner bit streams either automatically, in response to a signal generated by the system control unit 18', or upon an action from the subscriber. After the new set of banner bit streams have been downloaded, the banner manager 50' will output the system enable signal to the system control unit 18' to once again enable the Digital TV function of the BADTVR 30'.

Although the invention is illustrated and described herein as embodied in banner digital TV receivers and the associated free digital TV service, it is nevertheless not intended to be limited to the details shown, since various modifications and structural changes may be made therein.

## Claims

1. A digital television receiving apparatus including supplementary image storage means (36; 36') for storing supplementary image data and means (54; 54') for combining image data from said storage means (36; 36') with received television programme image data to produce a composite image for display, **characterised by** control means (50; 50') for disabling the apparatus in dependence on the usage of supplementary image data from said storage means (36; 36') to produce composite images.

2. An apparatus according to claim 1, wherein said control means (50; 50') is configured to disable the apparatus when a predetermined number of supplementary images have been used to form composite images.

3. An apparatus according to claim 1 or 2, including data network connection means (56; 56'), wherein the control means (50; 50') is configured to be operable to received supplementary image data by means of the data network connection means (56; 56') and store received supplementary image data in said storage means (36; 36').

4. A method for operating a digital television receiver, which comprises:
providing a digital television receiver performing a Digital TV function;
storing a plurality of advertisement messages in a storage device;
subsequent to storing the plurality of the advertisement messages, using the digital television receiver to receive video data from a digital television service provider;
with the digital television receiver, outputting the plurality of the advertisement messages and the received video data; and
if a predetermined number of the plurality of the advertisement messages has been output, then disabling the digital TV function of the digital television receiver.

5. The method according to claim 4, which comprises:
after the digital TV function has been disabled, storing a new set of the plurality of advertisement messages in the storage device; and subsequently enabling the digital TV function of the digital television receiver.

6. The method according to claim 5, which comprises performing the step of storing the new set of the plurality of the advertisement messages in the storage device by downloading the new set of the plurality of the advertisement messages from a network.

7. The method according to claim 4, which comprises setting the predetermined number such that all of the plurality of the advertisement messages that were stored will be output.

8. The method according to claim 4, which comprises performing the outputting step such that the plurality of the advertisement messages that were stored are output as banner advertisement messages together with the received video data.

9. The method according to claim 4, which comprises providing the storage device as a component of the digital television receiver.

10. The method according to claim 4, which comprises performing the step of storing the plurality of the advertisement messages by downloading the plurality of the advertisement messages from a network.

11. The method according to claim 4, which comprises:
receiving additional video data from the digital television service provider;
with the digital television receiver, outputting the additional video data without
outputting the plurality of the advertisement messages; and
limiting a duration that the step of outputting the additional video without outputting the plurality of the advertisement messages can be performed.

12. The method according to claim 11, which comprises performing the limiting step by:
initializing a counter to a predetermined value;
incrementing the counter by an amount corresponding to an amount of time that the step of outputting the plurality of the advertisement messages and the received video data is being performed;
decrementing the counter by an amount corresponding to an amount of time that the step of outputting the additional video without outputting the plurality of the advertisement messages is being performed; and
when the counter reaches the predetermined value, discontinuing the step of outputting the additional video without outputting the plurality of the advertisement messages.

13. The method according to claim 12, which comprises providing zero as the predetermined value.

14. The method according to claim 12, which comprises providing the counter as a component of the digital television receiver.

15. A digital television receiver, comprising:
a video decoder for decoding received video bit streams of a selected program to obtain decoded video bit streams of the selected program;
a banner storage device for storing data representing advertisement messages and thereby obtaining stored data;
a banner rendering unit for decoding and rendering the stored data to obtain rendered data;
a video reconstruction unit for combining the rendered data with the decoded video bit streams of the selected program to obtain a combined video output signal that includes information representing the selected program;
a banner manager unit for reading out the stored data from said banner storage device and for providing the stored data to said banner rendering unit, said banner manager unit generating a disable signal when a predetermined number of the advertisement messages, represented by the stored data, have been read out from the banner storage device; and
an output terminal connected to said video reconstruction unit for receiving the combined video output signal and for outputting the combined video output signal.

16. The television receiver according to claim 15, comprising a system control unit for receiving the disable signal and, in response thereto, for prohibiting said output terminal from receiving the information representing the selected program.

17. The television receiver according to claim 15, comprising:
a counter having a value that is incremented as the rendered data is combined with the decoded video bit streams of the selected program in said video reconstruction unit;
said video reconstruction unit also configured to selectively output the information representing the selected program without the rendered data;
said value of said counter being decremented in proportion to an amount of time during which said video reconstruction unit is outputting the information representing the selected program without the rendered data; and when the value of said counter reaches a predetermined lower limit value,
said video reconstruction unit being prohibited from outputting the information representing the selected program without the rendered data.

18. The television receiver according to claim 15, comprising a network adapter for downloading the stored data into said banner storage device from an external network.
